# EUROPEAN PATENT SPECIFICATION

(11) **EP 4 171 856 B1**
(45) Date of publication and mention of the grant of the patent: **30.07.2025**
(21) Application number: 21735672.4
(22) Date of filing: 23.06.2021
(51) Int. Cl.: B27B 9/02, B23D 47/02

(54) **PLUNGE SAW WITH CUT INDICATORS AND METHOD OF OPERATING A PLUNGE SAW**
TAUCHSÄGE MIT SCHNITTINDIKATOREN UND VERFAHREN ZUM BETRIEB EINER TAUCHSÄGE
SCIE PLONGEANTE AVEC INDICATEURS DE COUPE ET METHODE D'UTILISATION D'UNE SCIE PLONGEANTE

(30) Priority: 25.06.2020 US 202063044034 P
(43) Date of publication of application: 03.05.2023
(73) Proprietor: Festool GmbH, 73240 Wendlingen am Neckar (DE)
(72) Inventor: WEIK, Jonathan, 70794 Filderstadt (DE); MAJER, Michael, 73274 Notzingen (DE)
(74) Representative: Herrmann, Jochen
(86) International application number: PCT/EP2021/067123
(87) International publication number: WO 2021/259990

(56) References cited:
- DE-A1- 102017 129 809
- US-A1- 2015 165 637
- US-A1- 2018 272 553

## Description

### Related Application

This application claims priority to U.S. Provisional Patent Application No. 63/044,034, which was filed on June 25, 2020.

### Field of the Disclosure

The present disclosure is directed generally to plunge saws with cut indicators and/or to methods of operating plunge saws.

### Background of the Disclosure

Plunge saws are a type of handheld circular saw in which a plunge assembly, which includes and/or is operatively attached to a circular saw blade, is rotated relative to a base plate to plunge a region of the circular saw blade past the base plate and/or into a workpiece. In some instances, plunge saws may be utilized in a manner in which the circular saw blade initiates contact with an edge of the workpiece. In some instances, plunge saws may be utilized in a manner in which the circular saw blade initiates contact with a central region, or planar surface, of the workpiece. In both examples, it may be difficult for a user of the plunge saw to visually see a leading edge of the circular saw blade and/or a trailing edge of the circular saw blade as the circular saw blade is utilized to cut the workpiece. As such, it may be difficult for the user of the plunge saw to make precision cuts, especially when the precision cuts terminate within a central region of the workpiece and/or do not extend across an entirety of the workpiece. Thus, there exists a need for improved plunge saws with cut indicators and/or for improved methods of operating plunge saws.

A plunge saw according to the preamble of claim 1 and a method of operating a plunge saw according to the preamble of claim 14 are known form US 2015/165637 A1.

### Summary of the Disclosure

According to the invention, a plunge saw defined by the features of claim 1 and a method of operating a plunge saw defined by the features of claim 14 are provided.

Preferred embodiments are defined by the features of the dependent claims. of a light line

### Brief Description of the Drawings

Fig. 1 is a schematic illustration of examples of plunge saws that include a cut indicator, according to the present disclosure.
Fig. 2 is a schematic side view illustrating examples of plunge saws that include cut indicators, according to the present disclosure, and illustrating the plunge saws in a plunged orientation.
Fig. 3 is a schematic side view illustrating the plunge saws of Fig. 2 in a retracted orientation.
Fig. 4 is a schematic top view illustrating examples of a region of a plunge saw that includes a cut indicator, according to the present disclosure.
Fig. 5 is a less schematic top profile view of an example of a plunge saw according to the present disclosure.
Fig. 6 is a less schematic right side view of an example of a plunge saw according to the present disclosure.
Fig. 7 is a less schematic left side view of an example of a plunge saw according to the present disclosure.
Fig. 8 is another less schematic left side view of an example of a plunge saw according to the present disclosure.
Fig. 9 is another less schematic left side view of an example of a plunge saw according to the present disclosure.
Fig. 10 is a less schematic front view of an example of a plunge saw according to the present disclosure.
Fig. 11 is a less schematic rear view of an example of a plunge saw according to the present disclosure.
Fig. 12 is a less schematic top view of an example of a plunge saw according to the present disclosure.
Fig. 13 is a less schematic bottom view of an example of a plunge saw according to the present disclosure.
Fig. 14 is a flowchart illustrating examples of methods of operating a plunge saw, according to the present disclosure.

### Detailed Description and Best Mode of the Disclosure

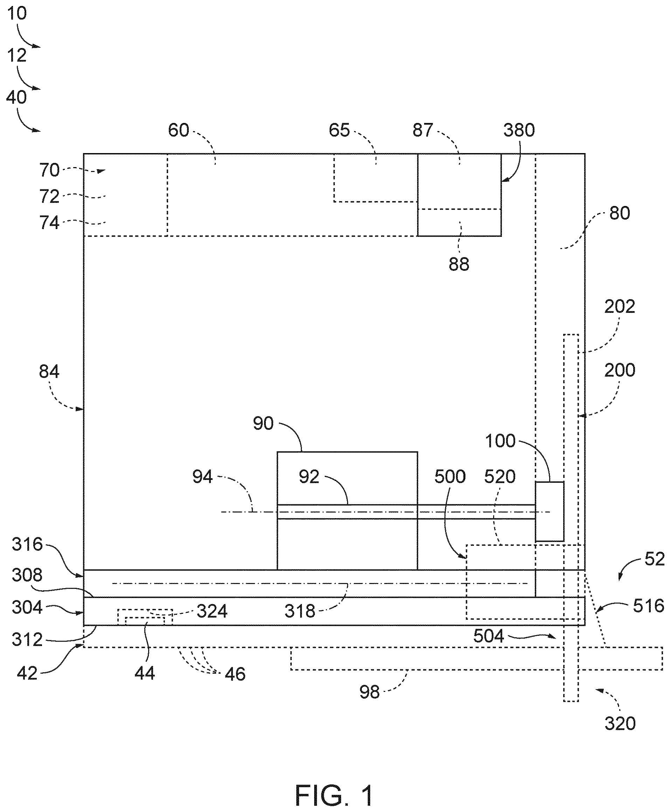

Figs. 1-13 provide examples of plunge saws 10 and/or components thereof, according to the present disclosure. Elements that serve a similar, or at least substantially similar, purpose are labeled with like numbers in each of Figs. 1-13, and these elements may not be discussed in detail herein with reference to each of Figs. 1-13. Similarly, all elements may not be labeled in each of Figs. 1-13, but reference numerals associated therewith may be utilized herein for consistency. Elements, components, and/or features that are discussed herein with reference to one or more of Figs. 1-13 may be included in and/or utilized with any of Figs. 1-13 without departing from the scope of the present disclosure.

In general, elements that are likely to be included in a particular embodiment are illustrated in solid lines, while elements that are optional are illustrated in dashed lines. However, elements that are shown in solid lines may not be essential to all embodiments and, in some embodiments, may be omitted without departing from the scope of the present disclosure.

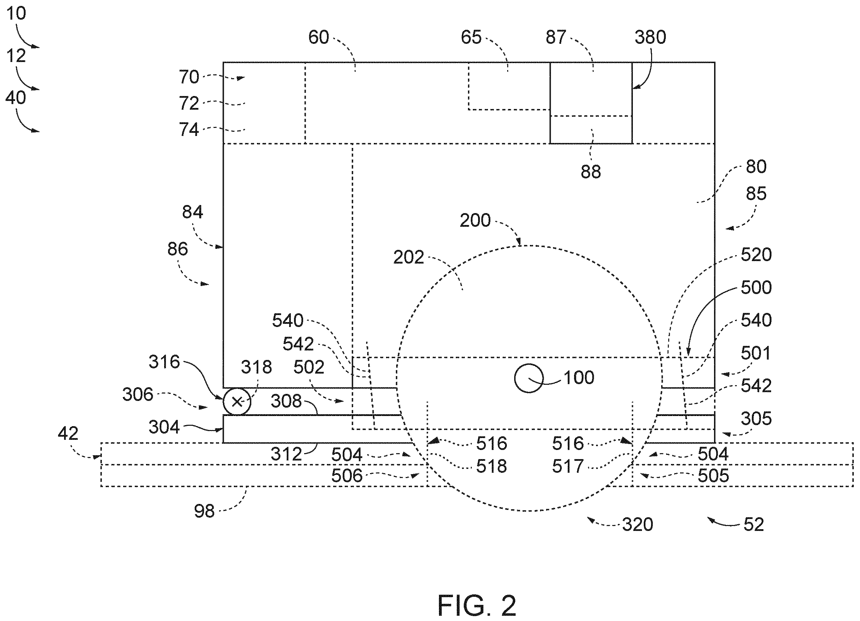

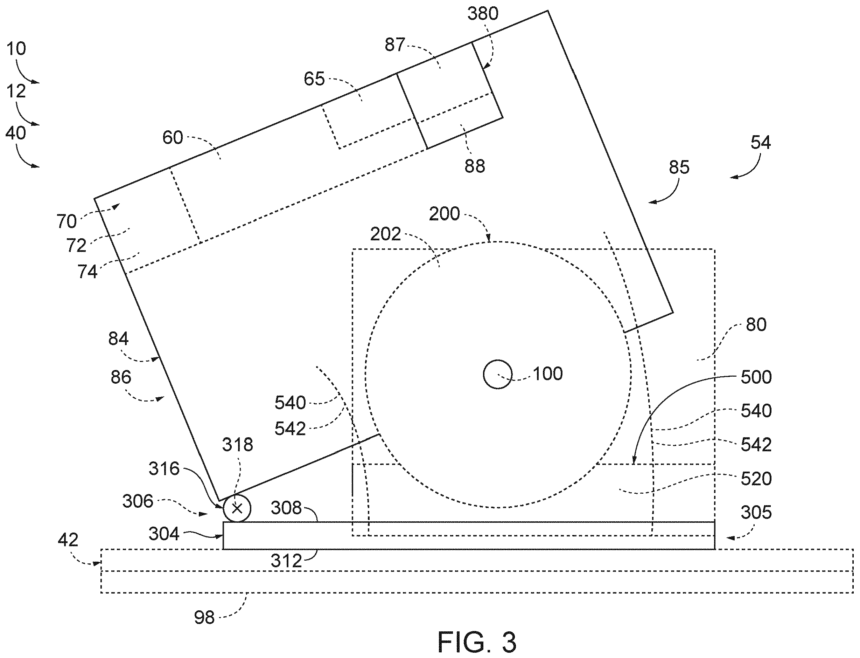

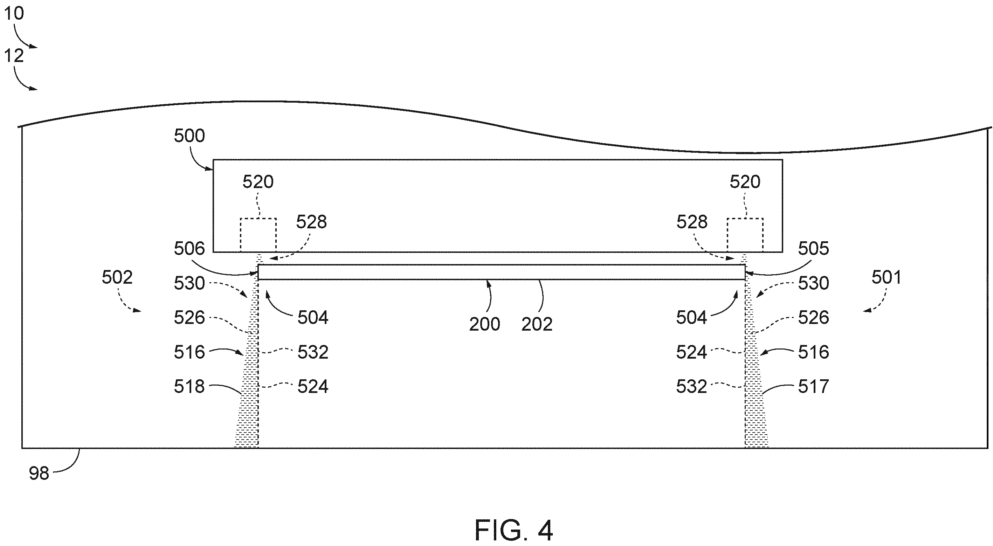

Fig. 1 is a schematic illustration of examples of plunge saws 10 that include cut indicators 500, according to the present disclosure. Fig. 2 is a schematic side view illustrating examples of plunge saws 10 that include cut indicators 500, according to the present disclosure, and illustrates the plunge saws in a plunged orientation 52, according to the present disclosure, while Fig. 3 is a schematic side view illustrating the plunge saws of Fig. 2 in a retracted orientation 54. Fig. 4 is a schematic top view illustrating examples of a region of plunge saws 10 that includes cut indicators 500, according to the present disclosure.

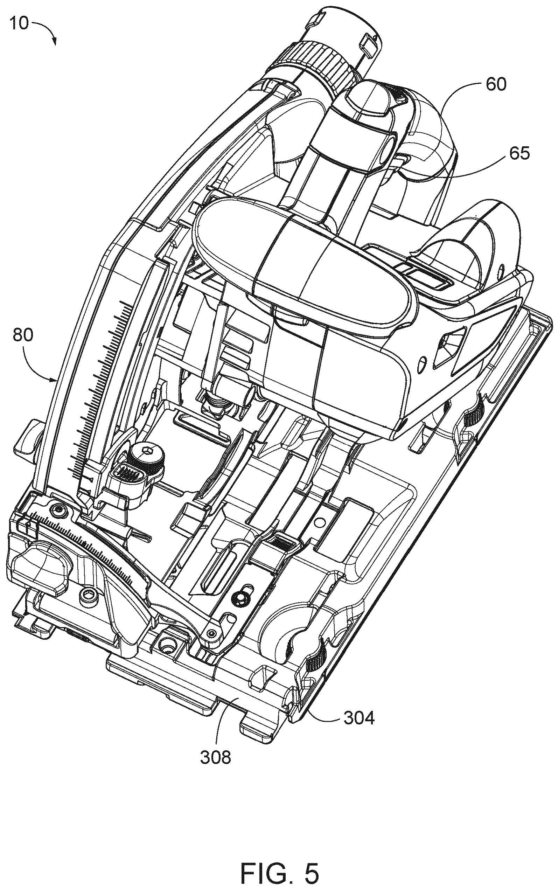

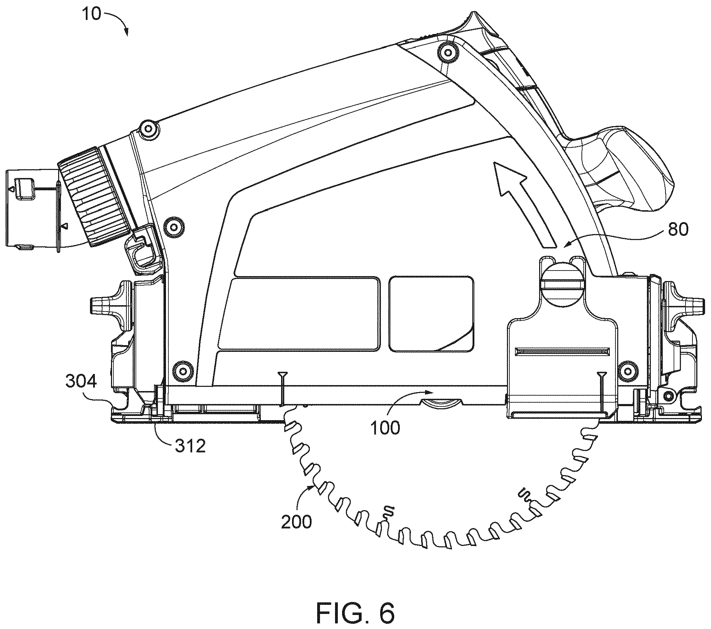

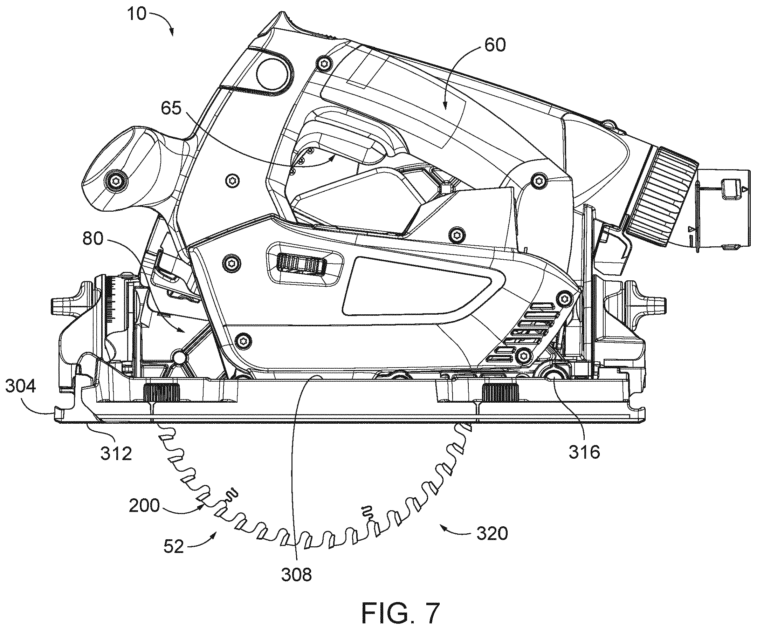

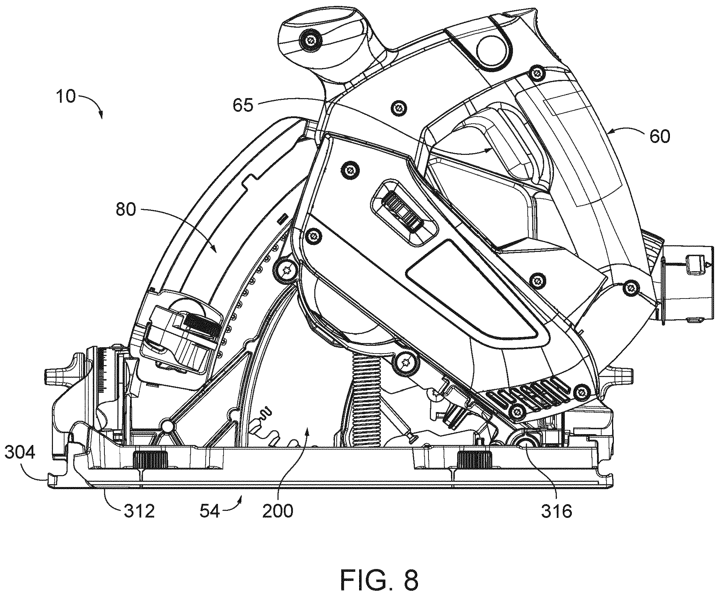

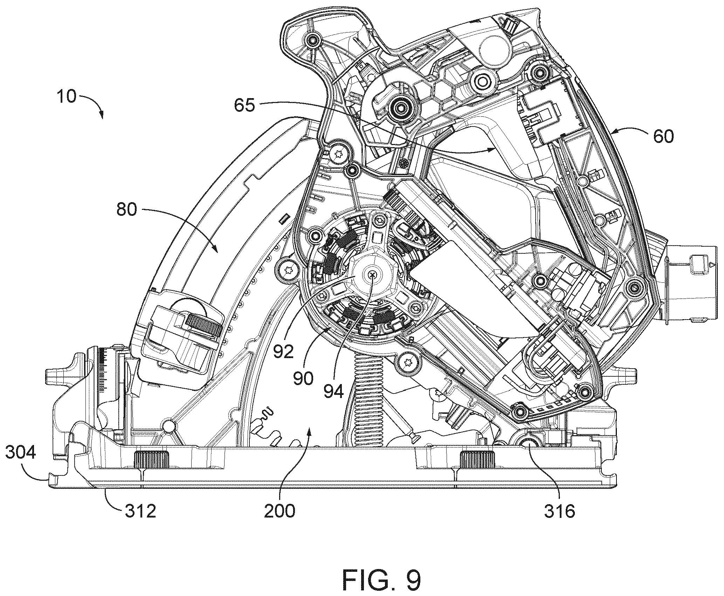

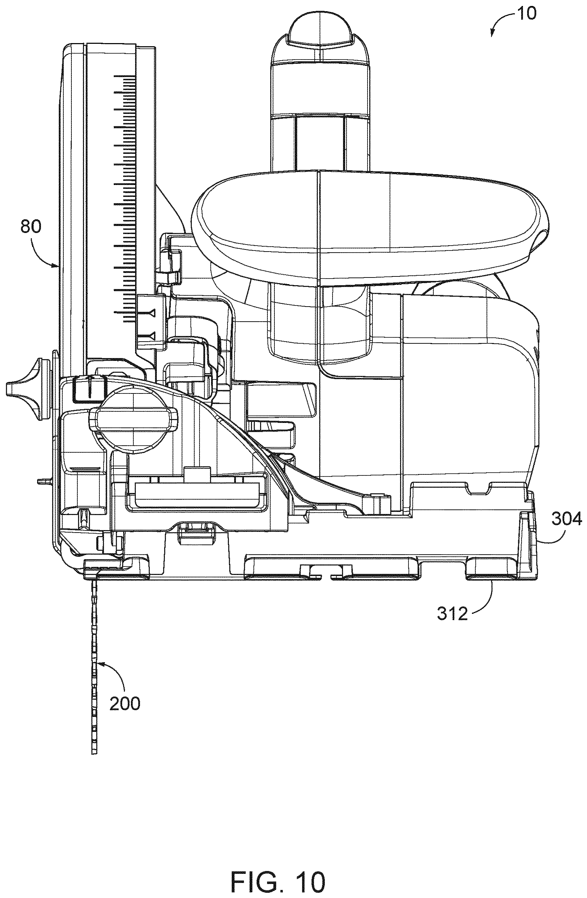

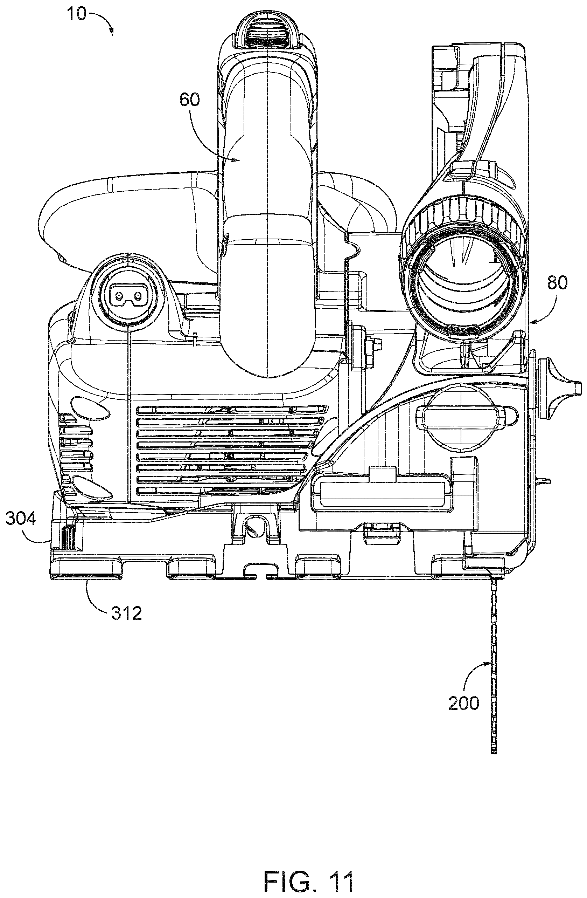

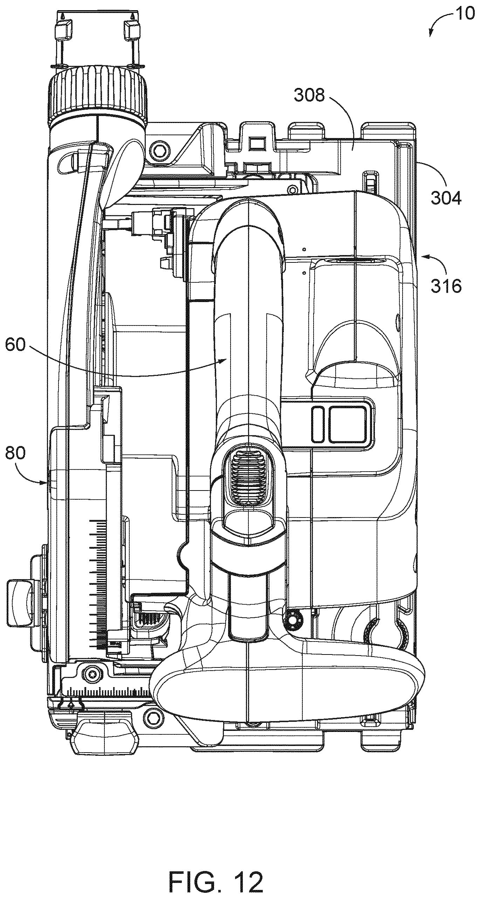

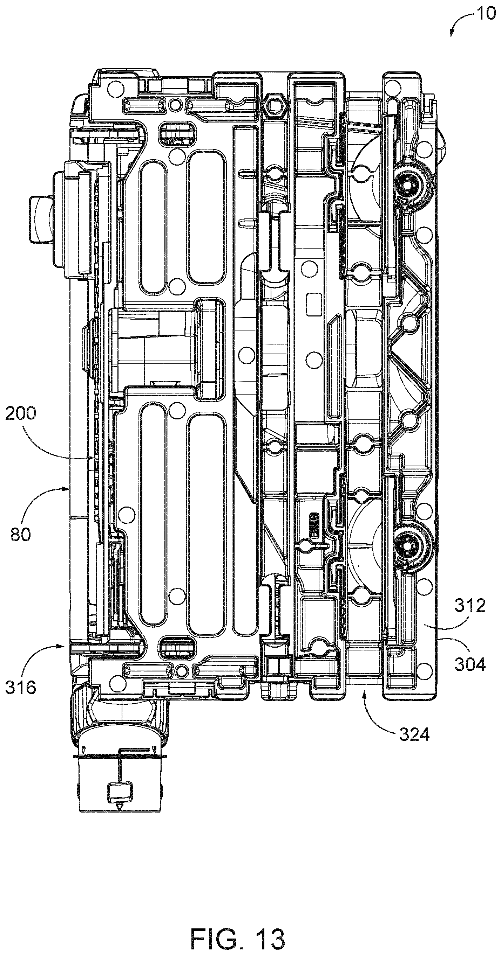

Figs. 5-13 are less schematic views of examples of a plunge saw 10 according to the present disclosure. More specifically, Fig. 5 illustrates a top profile view of plunge saw 10, and Fig. 6 illustrates a right side view of plunge saw 10. Fig. 7 illustrates a left side view of plunge saw 10 illustrating the plunge saw in plunged orientation 52, Fig. 8 illustrates the left side view of plunge saw 10 illustrating the plunge saw in retracted orientation 54, and Fig. 9 illustrates the left side view of Fig. 8 with several covers removed. Fig. 10 is a front view of plunge saw 10, Fig. 11 is a rear view of plunge saw 10, Fig. 12 is a top view of plunge saw 10, and Fig. 13 is a bottom view of plunge saw 10.

As perhaps best illustrated in Fig. 1, plunge saws 10 include a motor 90 that includes a motor shaft 92 configured to rotate about a shaft rotational axis 94. Plunge saws 10 also include an arbor 100 configured to receive a torque from motor 90 when motor shaft 92 rotates about the shaft rotational axis. As illustrated in dashed lines in Figs. 1-3 and in solid lines in Figs. 4, 6-11, and 13, plunge saws 10 also may include a circular saw blade 200. Circular saw blade 200, when present, may be operatively attached to the plunge saw via arbor 100 and/or may be configured for rotational movement with the arbor. Stated another way, arbor 100 may be configured to operatively attach circular saw blade 200 to plunge saw 10 and/or to rotate the circular saw blade responsive to receipt of the torque from motor 90. Rotation of circular saw blade 200 may facilitate cutting of a workpiece 98 with the circular saw blade, as schematically illustrated in Figs. 1-4.

As illustrated in Figs. 1-3 and 5-13, plunge saws 10 also include a base plate 304. Base plate 304 defines an arbor-facing side 308 and an arbor-opposed side 312. As illustrated in Figs. 1-3, 7-9, and 13, plunge saws 10 further include a base plate pivot 316. Base plate pivot 316 operatively attaches motor 90 and/or arbor 100 to arbor-facing side 308 of base plate 304. In some examples, motor 90 and arbor 100 may form a portion of, or may be referred to herein as forming a portion of, a plunge assembly 84, as illustrated in Figs. 1-3. In some such examples, base plate pivot 316 may be referred to herein as operatively attaching plunge assembly 84 to base plate 304 and/or as permitting plunge assembly 84 to rotate relative to base plate 304, such as about a pivot axis 318 of the base plate pivot.

With continued reference to Figs. 1-3, plunge saws 10 include a plunge mechanism 380. Plunge mechanism 380 may include any suitable structure that may be adapted, configured, designed, and/or constructed to be selectively actuated by the user of the plunge saw and during operative use of the plunge saw to cut workpiece 98. The selective actuation may permit and/or cause the plunge saw to transition from retracted orientation 54, which is illustrated, for example, in Fig. 3, to plunged orientation 52, which is illustrated, for example, in Figs. 1-2. The transition may be via rotation of arbor 100 and base plate 304 relative to one another, about base plate pivot 316, and/or about pivot axis 318 of the base plate pivot. Stated another way, and in some examples, this transition may be via rotation of plunge assembly 84 and base plate 304 relative to one another, about the base plate pivot, and/or about the pivot axis. This rotation may cause circular saw blade 200 to rotate, to move, to extend, and/or to plunge past arbor-opposed side 312 of base plate 304 and/or into workpiece 98.

Stated another way, arbor 100 may be configured to pivot relative to base plate 304 throughout a range of relative orientations, or relative angles, that may be bounded by the fully plunged orientation and the fully retracted orientation. For each relative orientation in this range of relative orientations, circular saw blade 200 may extend on arbor-opposed side 312 by a corresponding amount, thereby providing a corresponding maximum depth-of-cut for the circular saw.

As perhaps best illustrated in Figs. 1-4, plunge saws 10 also include cut indicator 500. As illustrated in Figs. 1-2 and 4, cut indicator 500 is configured to project a light line 516, or at least one light line 516, onto workpiece 98. The light line, or a location of the light line on the workpiece, visually indicates, on the workpiece, a location 504 of an edge of circular saw blade 200, such as a leading edge and/or a trailing edge of the circular saw blade.

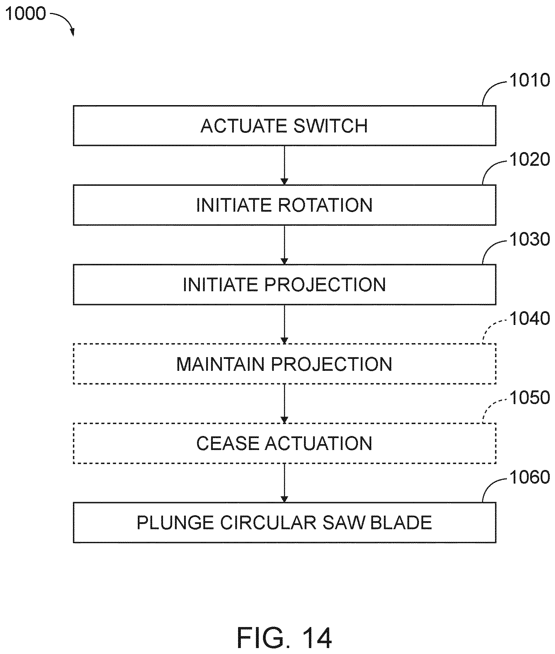

When plunge saws 10 are utilized to cut workpiece 98, and as discussed in more detail herein with reference to methods 1000 of Fig. 14, a switch 65 may be actuated, which may permit and/or facilitate supply of electric current to at least one other structure of the plunge saw, such as motor 90 and/or cut indicator 500. Actuation of switch 65 and/or receipt of the electric current may cause motor 90 to rotate motor shaft 92, which in turn may rotate circular saw blade 200, such as via rotation of arbor 100. Actuation of switch 65 also may cause cut indicator 500 to initiate projection of light line 516 onto workpiece 98, and a location of the light line on the workpiece may visually indicate, to the user of the plunge saw, location 504 of at least one edge of the circular saw blade. Stated another way, plunge saws 10 that include cut indicators 500 may provide the user with additional information and/or may make it easier for the user to identify location 504 of the edge of circular saw blade 200. This may permit and/or facilitate improved, or more precise, cuts within workpiece 98 and/or may permit the user to make precise cuts within workpiece 98 without the need for the user to directly observe the edge of the circular saw blade.

In some examples, cut indicator 500 may include and/or be a leading edge cut indicator 501 that may be configured to project light line 516 in the form of a leading edge light line 517, as perhaps best illustrated in Figs. 2 and 4. Leading edge cut indicator 501 and/or leading edge light line 517 thereof may be configured to visually indicate, on workpiece 98, location 504 in the form of a leading location 505 of a leading edge of circular saw blade 200, such as may be proximate a leading edge region 305 of base plate 304. In some such examples, leading edge cut indicator 501 may be adapted, configured, designed, and/or constructed to project light line 516, in the form of leading edge light line 517, onto workpiece 98 when plunge saw 10 is in both plunged orientation 52 and retracted orientation 54. Stated another way, leading edge cut indicator 501 may project leading edge light line 517 onto workpiece 98 regardless of a rotational orientation between base plate 304 and arbor 100 about base plate pivot 316 and/or pivot axis 318 thereof.

In some such examples, leading edge light line 517 may indicate the location of the leading edge of the circular saw blade when, or only when, the plunge saw is in the fully plunged orientation. Stated another way, a location of the leading edge of the circular saw blade, within the workpiece, may vary with the relative orientation between the base plate and the arbor; however, the location of leading edge light line 517 on the workpiece may not vary with this relative orientation. However, this is not required of all embodiments, and it is within the scope of the present disclosure that the location of leading edge light line 517 on workpiece 98 may vary with the relative orientation between the base plate and the arbor, such as to indicate the location of the leading edge of the circular saw blade regardless of the relative orientation and/or throughout a range-of-motion between the base plate and the arbor.

Additionally or alternatively, and in some examples, cut indicator 500 may include and/or be a trailing edge cut indicator 502 that may be configured to project light line 516 in the form of a trailing edge light line 518, as perhaps best illustrated in Figs. 2 and 4. Trailing edge cut indicator 502 and/or trailing edge light line 518 thereof may be configured to visually indicate, on workpiece 98, location 504 in the form of a trailing location 506 of a trailing edge of circular saw blade 200, such as may be proximate a trailing edge region 306 of base plate 304. In some such examples, trailing edge cut indicator 502 may be adapted, configured, designed, and/or constructed to project light line 516, in the form of trailing edge light line 518, onto workpiece 98 when plunge saw 10 is in plunged orientation 52, only when the plunge saw is in the plunged orientation, when the plunge saw is in a fully plunged orientation, and/or only when the plunge saw is in the fully plunged orientation. Stated another way, trailing edge cut indictor 502 may not project trailing edge light line 518 onto workpiece 98 when the plunge saw is not in the plunged, or the fully plunged, orientation. In some such examples, a light source that projects trailing edge light line 518 onto the workpiece may be blocked except when the plunge saw is in the plunged, or fully plunged, orientation.

Cut indicator 500, including leading edge cut indicator 501 and/or trailing edge cut indicator 502, may utilize light line 516 to indicate location 504 in any suitable manner. As an example, and as perhaps best illustrated in Fig. 4, cut indicator 500 may project one or more light lines 516 in a direction that is perpendicular, or at least substantially perpendicular, to a blade plane 202 within which circular saw blade 200 may be configured to rotate.

Cut indicator 500 may include any suitable structure. As an example, cut indicator 500 may include a light source 520, which may be configured to generate, to emit, and/or to project light line 516. An example of light source 520 includes at least a cut indicator laser and/or a cut indicator light emitting diode (LED).

Cut indicator 500 and/or light source 520 thereof may project light line 516 in any suitable manner. As an example, light source 520 may be configured to project collimated light 524, as indicated by the dashed line in Fig. 4, and the collimated light may define light line 516. As another example, light source 520 may be configured to project a light arc 526, as indicated by the textured area in Fig. 4. In some such examples, light line 516 may be defined by a portion of the light arc that is incident upon workpiece 98. In some such examples, light source 520 may be configured to project light, or the light arc, past circular saw blade 200. In such examples, a first portion 528 of the light may be incident upon circular saw blade 200 and a second portion 530 of the light may be incident upon workpiece 98. In some examples, the second portion of the light may define light line 516. In some examples, location 504 may be indicated, on workpiece 98, by a transition 532 from a shadow of the circular saw blade to the light line.

A discussed, plunge saws 10 may include switch 65, which may be configured to selectively supply and/or apply an electric current to at least one other component of the plunge saw, such as motor 90 and/or cut indicator 500. In some examples, cut indicator 500 may be configured to indicate the location of the edge of the circular saw blade, via projection of light line 516, when, or only when, the switch selectively applies the electric current to the at least one other component of the plunge saw. Alternatively, and in some examples, the cut indicator may be configured to initiate projection of light line 516 when the switch selectively applies the electric current to the at least one other component of the plunge saw. In some such examples, the cut indicator also may be configured to indicate the location of the edge of the circular saw blade, via projection of light line 516, for at least a threshold indication time. This may include indicating the location for at least the threshold indication time regardless of an actuation state of switch 65. Such a configuration may provide the user with information regarding the location of the edge of the circular saw blade even when switch 65 is not, or is not continuously, actuated and/or depressed. Examples of the threshold indication time include times of at least 5 seconds, at least 10 seconds, at least 15 seconds, at least 20 seconds, at least 25 seconds, at least 30 seconds, at most 60 seconds, at most 50 seconds, at most 40 seconds, at most 30 seconds, at most 20 seconds, and/or at most 10 seconds.

In some examples, switch 65 may include an initial actuated position and a subsequent actuated position. When the switch is in the initial actuated position, the switch may apply the electric current to the cut indicator and/or the cut indicator may indicate the location of the edge of the circular saw blade on the workpiece. When in the subsequent actuated position, the switch may apply the electric current to both the cut indicator and the motor. Such a configuration may permit the user to determine the position of the edge of the circular saw blade prior to rotation of the circular saw blade.

Switch 65 may form a portion of plunge assembly 84. Stated another way, switch 65 may be operatively attached to base plate 304 via base plate pivot 316 and/or may be configured to pivot with the plunge assembly and/or relative to the base plate about the base plate pivot. Such a configuration may permit and/or facilitate improved control of the plunge saw and/or actuation of the switch by the user.

In contrast, at least a portion of cut indicator 500, such as a portion of cut indicator 500 that projects light line 516 and/or such as light source 520, may be operatively attached to and/or may form a portion of base plate 304. Stated another way, at least the portion of cut indicator 500 may be operatively attached to arbor 100, to motor 90, and/or to plunge assembly 84 via the base plate pivot. In some examples, light source 520 may be operatively attached to base plate 304. In some such examples, cut indicator 500 also may include an electrical conductor 540, as illustrated in Figs. 2-3, that may extend between plunge assembly 84 and light source 520, such as to electrically power the light source. In some examples, light source 520 may be operatively attached to plunge assembly 84. In some such examples, cut indicator 500 also may include a fiber optic cable 542, as illustrated in Figs. 2-3, that may extend between plunge assembly 84 and/or light source 520 thereof and projects light line 516 onto workpiece 98. Such configurations may permit and/or facilitate projection of light line 516 from a region of plunge saws 10 (e.g., base plate 304) that is near and/or proximate workpiece 98.

In some examples of plunge saws 10, and as perhaps best illustrated in Figs. 2-3, base plate pivot 316 may operatively attach a trailing edge region 86 of plunge assembly 84 to a trailing edge region 306 of base plate 304. Stated another way, base plate pivot 316 may be configured to permit a leading edge region 85 of plunge assembly 84 to move toward and/or away from leading edge region 305 of base plate 304 via rotation about the base plate pivot.

In some examples of plunge saws 10, and as perhaps best illustrated in Figs. 1-3, plunge mechanism 380 may include a plunge release mechanism 87. Plunge release mechanism 87, when present, may be configured to be urged and/or actuated, by the user, to permit the plunge saw to transition from the retracted orientation to the plunged orientation. Examples of plunge release mechanism 87 include any suitable mechanical pivot, mechanical switch, linkage, and/or surface that may be configured to receive an actuation force from the user.

As also illustrated in Figs. 1-3, plunge mechanism 380 may include a retracted orientation lock 88. Retracted orientation lock 88, when present, may be configured to selectively retain plunge saw 10 in the retracted orientation. In such a configuration, plunge release mechanism 87 may be configured to be selectively actuated to release the retracted orientation lock and/or to permit the plunge saw to transition from the retracted orientation to the plunged orientation. Examples of retracted orientation lock 88 include any suitable catch, clasp, mechanical lock, and/or one or more structures that may be configured to resist rotation about base plate pivot 316 when plunge release mechanism 87 is not actuated by the user and/or to permit rotation about the base plate pivot when the plunge release mechanism is actuated by the user.

Plunge saws 10 may include any suitable type or style of plunge saw that is adapted, configured, designed, and/or constructed to utilize a circular saw blade 200 to cut the workpiece. Examples of plunge saws 10 include a handheld plunge saw 12 and/or a track saw 40, as schematically illustrated in Figs. 1-3. In some examples, plunge saws 10 may include structure and/or features from both of the above saws, and/or may incorporate functionality of both of the above saws. As an example, and as discussed in more detail herein, a given plunge saw 10 may be and/or may incorporate functionality of handheld plunge saw 12 and/or track saw 40. Plunge saws 10 according to the present disclosure thus may include one or more of the features disclosed herein, but plunge saws 10 are not required to include all of the features disclosed herein.

Motor 90 may include any suitable structure that may provide the motive force for rotation of motor shaft 92 and/or for rotation and/or actuation of circular saw blade 200. Examples of motor 90 include an electric motor, an AC electric motor, a DC electric motor, a brushless DC motor, a variable-speed motor, and/or a single-speed motor.

As illustrated in dashed lines in Figs. 1-3 and in solid lines in Figs. 5, 7-9, and 11-12, plunge saws 10 may include a gripping region 60 that is configured to be gripped and/or held by a user during operation of the plunge saw. Gripping region 60, when present, also may be referred to herein as and/or may be a handle, or hand grip.

As also illustrated in dashed lines in Figs. 1-3 and in solid lines in Figs. 5 and 7-9, plunge saws 10 may include at least one switch 65. As discussed, switch(es) 65 may be configured to be selectively actuated by the user of the plunge saw, such as to enable and/or permit electric current to be provided to at least one other component of the plunge saw and/or to permit powered operation of the at least one other component of the plunge saw. As examples, selective actuation of switch(es) 65 may be utilized to enable operation of a motor controller of the plunge saw, to selectively supply and/or apply an electric current to motor 90, to enable the motor controller to selectively apply the electric current to the motor, and/or to permit, or direct, the motor to provide the motive force for rotation of the motor shaft. In some examples, the electric current may be utilized to power, or to directly power, at least one other component of the plunge saw, such as motor 90. In some such examples, the electric current also may be referred to herein as an electric power signal. In some examples, the electric current may be an electric data signal that is sent to at least one other component of the plunge saw, such as the motor controller of the plunge saw. In some such examples, the electric current also may be referred to herein as a data signal and/or as an electric data signal. Examples of switch 65 include an electrical switch, a normally open electrical switch, a momentary electrical switch, and/or a locking momentary electrical switch.

Plunge saws 10 may include any suitable power source, and corresponding power structures 70, for powering motor 90. Examples of the power structures include a power cord 72 and/or a battery 74 as illustrated in dashed lines in Figs. 1-3.

As also illustrated in dashed lines in Figs. 1-3 and in solid lines in Figs. 5-13, plunge saws 10 may include a blade guard 80. Blade guard 80, when present, may be configured to cover, to house, and/or to contain at least a region of circular saw blade 200, such as to prevent, or to decrease a potential for, contact between the user and the circular saw blade.

In some examples, and as discussed, plunge saws 10 may be track saw 40. In examples of plunge saws 10 that are a track saw 40, base plate 304 may include a rib-receiving channel 324, which may be configured to receive a raised elongate rib 44 of a track 42, as perhaps best illustrated in Fig. 1. Track 42 also may be referred to herein as an elongate track 42 and may be formed from one or more elongate track segments, or track sections, 46, which may be operatively attached to one another to define any suitable track length. During operation of track saws 40, track 42 may be operatively attached, or clamped, to workpiece 98 such that an edge of the track corresponds to a desired cut line for the track saw. Subsequently, the track saw may be positioned, relative to the track, such that raised elongate rib 44 is positioned within rib-receiving channel 324; and the track saw then may be translated along at least a fraction of the length of the elongate track, thereby producing a straight cut along the desired cut line.

Fig. 14 is a flowchart illustrating examples of methods 1000 of operating a plunge saw, according to the present disclosure, such as plunge saw 10 of Figs. 1-13. Methods 1000 include actuating a switch at 1010 and initiating rotation at 1020. Methods 1000 also include initiating projection at 1030 and may include maintaining projection at 1040. Methods 1000 further may include ceasing actuation at 1050 and include plunging a circular saw blade at 1060.

Actuating the switch at 1010 may include actuating any suitable switch of the plunge saw. This may include actuating the switch to selectively apply, or supply, an electric current to at least one other component of the plunge saw. Examples of the at least one other component of the plunge saw are disclosed herein. Examples of the switch are disclosed herein with reference to switch 65.

In some examples of methods 1000, the actuating at 1010 may include actuating the switch to an initial actuated position. In some such examples, the initiating at 1030 may be responsive to the actuating the switch to the initial actuated position. In some such examples, the actuating at 1010 further may include actuating, or subsequently actuating, the switch to a subsequent actuated position, which differs from the initial actuated position. In some such examples, the initiating at 1020 may be responsive to the actuating the switch to the subsequent actuated position.

Initiating rotation at 1020 may include initiating rotation of the circular saw blade of the plunge saw. This may include applying a torque to the circular saw blade with a motor of the circular saw, via a motor shaft of the motor, and/or via an arbor of the circular saw. Examples of the motor are disclosed herein with reference to motor 90. Examples of the motor shaft are disclosed herein with reference to motor shaft 92. Examples of the arbor are disclosed herein with reference to arbor 100. The initiating at 1020 may be responsive to, at least partially responsive to, subsequent to, and/or a result of the actuating at 1010.

Initiating projection at 1030 may include initiating projection of a light line onto a workpiece. This may include initiating projection of the light line to indicate, or to visually indicate, on the workpiece and/or to a user of the circular saw, a location of an edge of the circular saw blade, such as to permit and/or facilitate improved cut precision in the workpiece and/or with the circular saw blade. Examples of the light line are disclosed herein with reference to light line 516, leading edge light line 517, and/or trailing edge light line 518. The initiating at 1030 may be responsive to, at least partially responsive to, subsequent to, and/or a result of the actuating at 1010. Additionally or alternatively, the initiating at 1030 may be performed prior to, during, and/or at least partially concurrently with the initiating at 1020 and/or rotation of the circular saw blade.

In some examples, the initiating at 1030 may include initiating projection of a leading edge light line onto the workpiece. In some examples, the initiating at 1030 may include initiating projection of a trailing edge light line onto the workpiece. In some such examples, the initiating projection of the trailing edge light line onto the workpiece may be responsive to and/or a result of the plunging at 1060.

According to the invention, the projection of the light line includes projecting light past the circular saw blade. This includes projecting such that a first portion of the light is incident upon the circular saw blade and optionally such that a second portion of the light projects past the circular saw blade

According to the invention, a second portion of the light is incident upon the workpiece and defines the light line. In some such examples, the location of the edge of the circular saw blade may be indicated, on the workpiece, by a transition from a shadow of the circular saw blade to the light line.

Maintaining projection at 1040 may include maintaining projection of the light line onto the workpiece for at least a threshold indication time. This may include maintaining projection regardless of a state of actuation of the switch. Stated another way, ceasing actuation at 1050 may include ceasing actuation of the switch during the maintaining at 1040. Stated yet another way, the maintaining at 1040 may include maintaining subsequent to the ceasing at 1050, when performed. Examples of the threshold indication time are disclosed herein.

Plunging the circular saw blade at 1060 may include plunging the circular saw blade into the workpiece. The plunging at 1060 may be performed during rotation of the circular saw blade and/or during projection of the light line onto the workpiece. As such, and at least subsequent to the plunging at 1060, the light line visually indicates, on the workpiece, the location of the edge of the circular saw blade in and/or within the workpiece.

In some examples, the plunging at 1060 may include rotating a plunge assembly of the plunge saw relative to a base plate of the plunge saw and/or about a base plate pivot of the plunge saw. Examples of the plunge assembly are disclosed herein with reference to plunge assembly 84. In some such examples, the rotating may include rotating a leading edge of the plunge assembly toward a leading edge of the base plate.

In the present disclosure, several of the illustrative, non-exclusive examples have been discussed and/or presented in the context of flow diagrams, or flow charts, in which the methods are shown and described as a series of blocks, or steps. Unless specifically set forth in the accompanying description, it is within the scope of the present disclosure that the order of the blocks may vary from the illustrated order in the flow diagram, including with two or more of the blocks (or steps) occurring in a different order and/or concurrently.

As used herein, the term "and/or" placed between a first entity and a second entity means one of (1) the first entity, (2) the second entity, and (3) the first entity and the second entity. Multiple entities listed with "and/or" should be construed in the same manner, i.e., "one or more" of the entities so conjoined. Other entities may optionally be present other than the entities specifically identified by the "and/or" clause, whether related or unrelated to those entities specifically identified. Thus, as a non-limiting example, a reference to "A and/or B," when used in conjunction with open-ended language such as "comprising" may refer, in one embodiment, to A only (optionally including entities other than B); in another embodiment, to B only (optionally including entities other than A); in yet another embodiment, to both A and B (optionally including other entities). These entities may refer to elements, actions, structures, steps, operations, values, and the like.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

As used herein, "at least substantially," when modifying a degree or relationship, may include not only the recited "substantial" degree or relationship, but also the full extent of the recited degree or relationship. A substantial amount of a recited degree or relationship may include at least 75% of the recited degree or relationship. For example, an object that is at least substantially formed from a material includes objects for which at least 75% of the objects are formed from the material and also includes objects that are completely formed from the material. As another example, a first length that is at least substantially as long as a second length includes first lengths that are within 75% of the second length and also includes first lengths that are as long as the second length.

### Industrial Applicability

The plunge saws disclosed herein are applicable to the power tool industry.

## Claims

1. A plunge saw (10), comprising:
a motor (90) including a motor shaft (92) configured to rotate about a shaft rotational axis (94);
an arbor (100) configured to operatively attach a circular saw blade (200) to the plunge saw (10) and to receive a torque from the motor (90) when the motor shaft (92) rotates about the shaft rotational axis (94);
a base plate (304) that defines an arbor-facing side (308) and an arbor-opposed side (312);
a base plate pivot (316) that operatively attaches the arbor (100) to the arbor-facing side (308) of the base plate (304);
a plunge mechanism (380) configured to be selectively actuated, by a user of the plunge saw (10) and during operative use of the plunge saw (10) to cut a workpiece (98), to transition the plunge saw (10) from a retracted orientation to a plunged orientation, via rotation of the arbor (100) and the base plate (304) relative to one another and about the base plate pivot (316), and plunge the circular saw blade (200) into the workpiece (98); and
a cut indicator (500) configured to project a light line (516) onto the workpiece (98) to visually indicate, on the workpiece (98), a location of an edge of the circular saw blade (200);
**characterized in that**
the cut indicator (500) includes a light source (520) configured to project the light line (516);
wherein the light source (520) is configured to project light past the circular saw blade (200) such that a first portion (528) of the light is incident upon the circular saw blade (200) and a second portion of the light is incident upon the workpiece (98), wherein the second portion of the light defines the light line (516).

2. The plunge saw (10) of claim 1, wherein the cut indicator (500) includes a leading edge cut indicator (501), and further wherein the light line (516) is a leading edge light line (517) configured to visually indicate, on the workpiece (98), a leading location of a leading edge of the circular saw blade (200),
wherein preferably the leading edge cut indicator (501) is configured to project the light line (516) onto the workpiece (98) when the plunge saw (10) is in both the retracted orientation and the plunged orientation.

3. The plunge saw (10) of any of claims 1 or 2, wherein the cut indicator (500) includes a trailing edge cut indicator (502), and further wherein the light line (516) includes a trailing edge light line (518) configured to visually indicate, on the workpiece (98), a trailing location of a trailing edge of the circular saw blade (200),
wherein preferably the trailing edge cut indicator (502) is configured to project the light line (516) onto the workpiece (98) at least one of:
(i) when the plunge saw (10) is in the plunged orientation;
(ii) only when the plunge saw (10) is in the plunged orientation;
(iii) when the plunge saw (10) is in a fully plunged orientation; and
(iv) only when the plunge saw (10) is in the fully plunged orientation.

4. The plunge saw (10) of any of claims 2-3, wherein the cut indicator (500) includes both the trailing edge cut indicator (502) and a leading edge cut indicator (501).

5. The plunge saw (10) of any of claims 1-4, wherein the cut indicator (500) is configured to project the light line (516) in a direction that is at least substantially perpendicular to a blade plane within which the circular saw blade (200) is configured to rotate.

6. The plunge saw of any of claims 1-5,
wherein the light source (520) includes, or is, a cut indicator LED configured to project the light line (516), and/or wherein the light source (520) is configured to project collimated light, the collimated light defining the light line (516),
and/or wherein the light source (520) is configured to project a light arc, the light line (516) being defined by a portion of the light arc that is incident upon the workpiece (98).

7. The plunge saw (10) of any of claims 1-6, wherein the location of the edge of the circular saw blade (200) is indicated, on the workpiece (98), by a transition from a shadow of the circular saw blade (200) to the light line (516).

8. The plunge saw (10) of any of claims 1-7, wherein the plunge saw (10) includes a plunge assembly, which includes the arbor (100) and the motor (90) and is operatively attached to the base plate (304) via the base plate pivot (316),
wherein the cut indicator (500) preferably further includes at least one of:
(i) an electrical conductor that extends between the plunge assembly and the light source (520); and
(ii) a fiber optic cable that is operatively attached to both the plunge assembly and the base plate (304) and is configured to project the light line (516).

9. The plunge saw (10) of any of claims 1-8, wherein the plunge saw (10) includes a switch configured to selectively supply an electric current to at least one other component of the plunge saw (10).

10. The plunge saw (10) of claim 9, wherein the cut indicator (500) is configured to indicate the location of the edge of the circular saw blade (200) when the switch selectively applies the electric current to the at least one other component of the plunge saw (10),
wherein preferably the cut indicator (500) is configured to indicate the location of the edge of the circular saw blade (200) for at least a threshold indication time of at least 5 seconds.

11. The plunge saw (10) of any of claims 1-10, wherein the base plate pivot (316) operatively attaches a trailing edge region of a plunge assembly to a trailing edge region of the base plate (304).

12. The plunge saw (10) of any of claims 1-11, wherein the plunge mechanism (380) includes a plunge release mechanism configured to be selectively actuated, by the user, to permit the plunge saw (10) to transition from the retracted orientation to the plunged orientation,
wherein the plunge mechanism (380) preferably further includes a retracted orientation lock configured to selectively retain the plunge saw (10) in the retracted orientation, wherein the plunge release mechanism is further preferably configured to be selectively actuated to release the retracted orientation lock and permit the plunge saw (10) to transition from the retracted orientation to the plunged orientation.

13. The plunge saw of any of claims 1-12, wherein the plunge saw is a track saw.

14. A method of operating a plunge saw (10), the method comprising:
actuating a switch of the plunge saw (10);
responsive to the actuating, initiating rotation of a circular saw blade (200) of the plunge saw (10);
responsive to the actuating, initiating projection of a light line (516) onto a workpiece (98) to visually indicate, on the workpiece (98), a location of an edge of the circular saw blade (200); and
during the rotation of the circular saw blade (200) and also during projection of the light line (516), plunging the circular saw blade (200) into the workpiece (98),
**characterized by**
projection of the light line (516) includes projecting light past the circular saw blade (200) such that a first portion of the light is incident upon the circular saw blade (200) and a second portion (530) of the light is incident on the workpiece (98), wherein the second portion of the light defines the light line (516).

15. The method of claim 14, wherein the initiating projection includes initiating projection of a leading edge light line (517) onto the workpiece (98),
and/or wherein, responsive to the plunging, the initiating projection further includes initiating projection of a trailing edge light line (518) onto the workpiece (98) ,
and/or wherein the method further includes maintaining projection of the light line onto the workpiece (98) for at least a threshold indication time of at least 5 seconds ,
and/or wherein the plunging includes rotating a plunge assembly of the plunge saw (10), which includes the circular saw blade (200), relative to a base plate (304) of the plunge saw (10) and about a base plate pivot (316) of the plunge saw (10),
wherein the rotating preferably includes rotating a leading edge of the plunge.

## Patentansprüche

1. Tauchsäge (10), umfassend:
einen Motor (90) mit einer Motorwelle (92), die dazu ausgebildet ist, sich um eine Wellen-Drehachse (94) zu drehen;
einen Dorn (100), der dazu ausgebildet ist, ein Kreissägeblatt (200) operativ an der Tauchsäge (10) anzubringen und ein Drehmoment von dem Motor (90) aufzunehmen, wenn sich die Motorwelle (92) um die Wellen-Drehachse (94) dreht;
eine Grundplatte (304), die eine dem Dorn zugewandte Seite (308) und eine dem Dorn abgewandte Seite (312) definiert;
ein Gelenk der Grundplatte (316), das den Dorn (100) operativ an der dem Dorn zugewandten Seite (308) der Grundplatte (304) befestigt;
einen Eintauchmechanismus (380), der dazu ausgebildet ist, während des operativen Gebrauchs der Tauchsäge (10) zum Schneiden eines Werkstücks (98) wahlweise von einem Benutzer der Tauchsäge (10) betätigt zu werden, um die Tauchsäge (10) von einer zurückgezogenen Ausrichtung in eine eingetauchte Ausrichtung zu überführen, und zwar durch Drehung des Dorns (100) und der Grundplatte (304) relativ zueinander und um das Gelenk der Grundplatte (316), und um das Kreissägeblatt (200) in das Werkstück (98) einzutauchen; und
eine Schnittanzeige (500), die dazu ausgebildet ist, eine Lichtlinie (516) auf das Werkstück (98) zu projizieren, um auf dem Werkstück (98) eine Position einer Kante des Kreissägeblatts (200) visuell anzuzeigen;
**dadurch gekennzeichnet, dass** die Schnittanzeige (500) eine Lichtquelle (520) umfasst, die dazu ausgebildet ist, die Lichtlinie (516) zu projizieren;
wobei die Lichtquelle (520) dazu ausgebildet ist, Licht an dem Kreissägeblatt (200) vorbei zu projizieren, so dass ein erster Anteil (528) des Lichts auf das Kreissägeblatt (200)
und ein zweiter Anteil des Lichts auf das Werkstück (98) fällt, wobei der zweite Anteil des Lichts die Lichtlinie (516) definiert.

2. Tauchsäge (10) nach Anspruch 1, wobei die Schnittanzeige (500) eine Vorderkanten-Schnittanzeige (501) umfasst und wobei die Lichtlinie (516) eine Vorderkanten-Lichtlinie (517) ist, die dazu ausgebildet ist, auf dem Werkstück (98) eine vordere Position einer Kante des Kreissägeblatts (200) visuell anzuzeigen,
wobei vorzugsweise die Vorderkanten-Schnittanzeige (501) dazu ausgebildet ist, die Lichtlinie (516) auf das Werkstück (98) zu projizieren, wenn sich die Tauchsäge (10) sowohl in der zurückgezogenen Ausrichtung als auch in der eingetauchten Ausrichtung befindet.

3. Tauchsäge (10) nach einem der Ansprüche 1 oder 2, wobei die Schnittanzeige (500) eine Nachlaufkanten-Schnittanzeige (502) umfasst und wobei die Lichtlinie (516) eine Nachlaufkanten-Lichtlinie (518) umfasst, die dazu ausgebildet ist, auf dem Werkstück (98) eine nachlaufende Position einer nachlaufenden Kante des Kreissägeblatts (200) visuell anzuzeigen,
wobei vorzugsweise die Nachlaufkanten-Schnittanzeige (502) dazu ausgebildet ist, die Lichtlinie (516) auf das Werkstück (98) zu projizieren, und zwar mindestens in einem der folgenden Fälle:
(i) wenn sich die Tauchsäge (10) in der eingetauchten Ausrichtung befindet;
(ii) nur wenn sich die Tauchsäge (10) in der eingetauchten Ausrichtung befindet;
(iii) wenn sich die Tauchsäge (10) in der vollständig eingetauchter Ausrichtung befindet; und
(iv) nur wenn sich die Tauchsäge (10) in der vollständig eingetauchten Ausrichtung befindet.

4. Tauchsäge (10) nach einem der Ansprüche 2-3, wobei die Schnittanzeige (500) sowohl die Nachlaufkanten-Schnittanzeige (502) als auch eine Vorderkanten-Schnittanzeige (501) umfasst.

5. Tauchsäge (10) nach einem der Ansprüche 1 bis 4, wobei die Schnittanzeige (500) dazu ausgebildet ist, die Lichtlinie (516) in eine Richtung zu projizieren, die zumindest im Wesentlichen senkrecht zu einer Blattebene ist, in der das Kreissägeblatt (200) ausgebildet ist, sich zu drehen.

6. Tauchsäge nach einem der Ansprüche 1 bis 5,
wobei die Lichtquelle (520) eine LED zur Schnittanzeige umfasst oder eine solche ist, die dazu ausgebildet ist, die Lichtlinie (516) zu projizieren, und/oder wobei die Lichtquelle (520) dazu ausgebildet ist, kollimiertes Licht zu projizieren, wobei das kollimierte Licht die Lichtlinie (516) definiert,
und/oder wobei die Lichtquelle (520) ausgebildet ist, um einen beleuchteten Bogen zu projizieren, wobei die Lichtlinie (516) durch einen Teil des beleuchteten Bogens definiert ist, der auf das Werkstück (98) fällt.

7. Tauchsäge (10) nach einem der Ansprüche 1-6, wobei die Position der Kante des Kreissägeblatts (200) auf dem Werkstück (98) durch einen Übergang von einem Schatten des Kreissägeblatts (200) zur Lichtlinie (516) angezeigt wird.

8. Tauchsäge (10) nach einem der Ansprüche 1-7, wobei die Tauchsäge (10) eine Tauchbaugruppe umfasst, die den Dorn (100) und den Motor (90) umfasst und operativ an der Grundplatte (304) über das Gelenk der Grundplatte (316) angebracht ist,
wobei die Schnittanzeige (500) vorzugsweise ferner mindestens eines der folgenden Merkmale aufweist:
(i) einen elektrischen Leiter, der sich zwischen der Tauchbaugruppe und der Lichtquelle (520) erstreckt; und
(ii) ein Lichtwellenleiterkabel, das sowohl an der Tauchbaugruppe als auch an der Grundplatte (304) operativ angebracht ist und dazu ausgebildet ist, die Lichtlinie (516) zu projizieren.

9. Tauchsäge (10) nach einem der Ansprüche 1-8, wobei die Tauchsäge (10) einen Schalter umfasst, der ausgebildet ist, um wahlweise wenigstens eine andere Komponente der Tauchsäge (10) mit elektrischem Strom zu versorgen.

10. Tauchsäge (10) nach Anspruch 9, wobei die Schnittanzeige (500) dazu ausgebildet ist, die Position der Kante des Kreissägeblatts (200) anzuzeigen, wenn der Schalter wahlweise den elektrischen Strom an die mindestens eine andere Komponente der Tauchsäge (10) anlegt,
wobei die Schnittanzeige (500) vorzugsweise dazu ausgebildet ist, die Position der Kante des Kreissägeblatts (200) für mindestens eine Schwellenwert-Anzeigedauer von mindestens 5 Sekunden anzuzeigen.

11. Tauchsäge (10) nach einem der Ansprüche 1-10, wobei das Gelenk der Grundplatte (316) einen Bereich der hinteren Kante einer Tauchbaugruppe operativ an einem Bereich der hinteren Kante der Grundplatte (304) befestigt.

12. Tauchsäge (10) nach einem der Ansprüche 1-11, wobei der Eintauchmechanismus (380) einen Eintauchauslösemechanismus umfasst, der dazu ausgebildet ist, vom Benutzer wahlweise betätigt zu werden, um der Tauchsäge (10) den Übergang von der zurückgezogenen Ausrichtung in die eingetauchte Ausrichtung zu ermöglichen,
wobei der Eintauchmechanismus (380) vorzugsweise ferner eine Arretierung für die zurückgezogene Ausrichtung umfasst, die dazu ausgebildet ist, die Tauchsäge (10) wahlweise in der zurückgezogenen Ausrichtung zu halten, wobei der Eintauchauslösemechanismus ferner vorzugsweise dazu ausgebildet ist, wahlweise betätigt zu werden, um die Arretierung für die zurückgezogene Ausrichtung zu lösen und der Tauchsäge (10) den Übergang von der zurückgezogenen Ausrichtung in die eingetauchte Ausrichtung zu ermöglichen.

13. Tauchsäge nach einem der Ansprüche 1-12, wobei die Tauchsäge eine Schienensäge ist.

14. Verfahren zum Betreiben einer Tauchsäge (10), wobei das Verfahren umfasst:
Betätigen eines Schalters der Tauchsäge (10);
Auslösen der Drehung eines Kreissägeblatts (200) der Tauchsäge (10) als Reaktion auf die Betätigung;
Einleiten der Projektion einer Lichtlinie (516) auf ein Werkstück (98) als Reaktion auf die Betätigung, um auf dem Werkstück (98) eine Position einer Kante des Kreissägeblatts (200) visuell anzuzeigen; und
Eintauchen des Kreissägeblatts (200) in das Werkstück (98) während der Drehung des Kreissägeblatts (200) und auch während der Projektion der Lichtlinie (516),
**dadurch gekennzeichnet, dass** die Projektion der Lichtlinie (516) das Projizieren von Licht an dem Kreissägeblatt (200) vorbei umfasst, so dass ein erster Anteil des Lichts auf das Kreissägeblatt (200) fällt und ein zweiter Anteil (530) des Lichts auf das Werkstück (98) fällt, wobei der zweite Anteil des Lichts die Lichtlinie (516) definiert.

15. Verfahren nach Anspruch 14, wobei das Einleiten der Projektion das Einleiten der Projektion einer Vorderkanten-Lichtlinie (517) auf das Werkstück (98) umfasst,
und/oder wobei das Einleiten der Projektion als Reaktion auf das Eintauchen ferner das Einleiten der Projektion einer Lichtlinie (518) der hinteren Kante auf das Werkstück (98) umfasst,
und/oder wobei das Verfahren ferner das Aufrechterhalten der Projektion der Lichtlinie auf das Werkstück (98) für mindestens eine Schwellenwert-Anzeigedauer von mindestens 5 Sekunden umfasst,
und/oder wobei das Eintauchen das Drehen einer Tauchbaugruppe der Tauchsäge (10), die das Kreissägeblatt (200) umfasst, relativ zu einer Grundplatte (304) der Tauchsäge (10) und um ein Gelenk der Grundplatte (316) der Tauchsäge (10) umfasst,
wobei das Drehen vorzugsweise das Drehen einer vorderen Kante der Tauchbaugruppe umfasst.

## Revendications

1. Scie plongeante (10) comprenant :
un moteur (90) ayant un arbre de moteur (92) adapté pour tourner autour d'un axe de rotation d'arbre (94) ;
un mandrin (100) adapté pour monter de manière opérationnelle une lame de scie circulaire (200) sur la scie plongeante (10) et pour recevoir un couple du moteur (90) lorsque l'arbre de moteur (92) tourne autour de l'axe de rotation d'arbre (94) ;
une plaque de base (304) définissant un côté (308) faisant face au mandrin et un côté (312) opposé au mandrin ;
une articulation de la plaque de base (316) qui fixe de manière opérationnelle le mandrin (100) au côté faisant face au mandrin (308) de la plaque de base (304) ;
un mécanisme de plongée (380) adapté pour être actionné sélectivement par un utilisateur de la scie plongeante (10) pendant l'utilisation opérationnelle de la scie plongeante (10) pour couper une pièce à usiner (98), pour faire passer la scie plongeante (10) d'une orientation rétractée à une orientation plongée, en faisant tourner le mandrin (100) et la plaque de base (304) l'un par rapport à l'autre et autour de l'articulation de la plaque de base (316), et pour plonger la lame de scie circulaire (200) dans la pièce à usiner (98) ; et
un indicateur de coupe (500) adapté pour projeter une ligne de lumière (516) sur la pièce à usiner (98) afin d'indiquer visuellement sur la pièce à usiner (98) une position d'un bord de la lame de scie circulaire (200) ;
**caractérisé en ce que** l'indicateur de coupe (500) comprend une source de lumière (520) adaptée pour projeter la ligne de lumière (516) ;
la source de lumière (520) étant adaptée pour projeter de la lumière au-delà de la lame de scie circulaire (200), de sorte qu'une première partie (528) de la lumière est projetée sur la lame de scie circulaire (200)
et une seconde partie de la lumière est incidente sur la pièce à usiner (98), la seconde partie de la lumière définissant la ligne de lumière (516).

2. Scie plongeante (10) selon la revendication 1, dans laquelle l'indicateur de coupe (500) comprend un indicateur de coupe de bord avant (501) et dans laquelle la ligne de lumière (516) est une ligne de lumière de bord avant (517) adaptée pour indiquer visuellement sur la pièce à usiner (98) une position avant d'un bord de la lame de scie circulaire (200),
dans laquelle, de préférence, l'indicateur de coupe de bord avant (501) est adapté pour projeter la ligne de lumière (516) sur la pièce à usiner (98) lorsque la scie plongeante (10) est à la fois dans l'orientation rétractée et dans l'orientation plongée.

3. Scie plongeante (10) selon l'une des revendications 1 ou 2, dans laquelle l'indicateur de coupe (500) comprend un indicateur de coupe de bord arrière (502), et dans laquelle la ligne de lumière (516) comprend une ligne de lumière de bord arrière (518) configurée pour indiquer visuellement sur la pièce à usiner (98) une position arrière d'un bord arrière de la lame de scie circulaire (200),
dans laquelle, de préférence, l'indicateur de coupe de bord arrière (502) est adapté pour projeter la ligne de lumière (516) sur la pièce à usiner (98) dans au moins un des cas suivants :
(i) lorsque la scie plongeante (10) se trouve dans l'orientation plongée ;
(ii) uniquement lorsque la scie plongeante (10) se trouve dans l'orientation plongée ;
(iii) lorsque la scie plongeante (10) se trouve dans l'orientation entièrement plongée ; et
(iv) uniquement lorsque la scie plongeante (10) se trouve dans l'orientation entièrement plongée.

4. Scie plongeante (10) selon l'une quelconque des revendications 2-3, dans laquelle l'indicateur de coupe (500) comprend à la fois l'indicateur de coupe du bord arrière (502) et un indicateur de coupe du bord avant (501).

5. Scie plongeante (10) selon l'une quelconque des revendications 1 à 4, dans laquelle l'indicateur de coupe (500) est configuré pour projeter la ligne de lumière (516) dans une direction au moins sensiblement perpendiculaire à un plan de lame dans laquelle la lame de scie circulaire (200) est configurée pour tourner.

6. Scie plongeante selon l'une quelconque des revendications 1 à 5,
dans laquelle la source de lumière (520) comprend ou est une DEL d'indication de coupe adaptée pour projeter la ligne de lumière (516), et/ou dans laquelle la source de lumière (520) est adaptée pour projeter une lumière collimatée, la lumière collimatée définissant la ligne de lumière (516),
et/ou dans laquelle la source de lumière (520) est adaptée pour projeter un arc illuminé, la ligne de lumière (516) étant définie par une partie de l'arc illuminé qui est incidente sur la pièce à usiner (98).

7. Scie plongeante (10) selon l'une quelconque des revendications 1 à 6, dans laquelle la position du bord de la lame de scie circulaire (200) sur la pièce à usiner (98) est indiquée par un passage d'une ombre de la lame de scie circulaire (200) à la ligne de lumière (516).

8. Scie plongeante (10) selon l'une quelconque des revendications 1 à 7, dans laquelle la scie plongeante (10) comprend un ensemble plongeant comprenant le mandrin (100) et le moteur (90) et monté de manière opérationnelle sur la plaque de base (304) via l'articulation de la plaque de base (316),
dans laquelle l'indicateur de coupe (500) comprend de préférence en outre au moins l'une des caractéristiques suivantes :
(i) un conducteur électrique s'étendant entre l'ensemble plongeant et la source de lumière (520) ; et
(ii) un câble à fibre optique fixé de manière opérationnelle à la fois à l'ensemble plongeant et à la plaque de base (304) et adapté pour projeter la ligne de lumière (516).

9. Scie plongeante (10) selon l'une quelconque des revendications 1 à 8, dans laquelle la scie plongeante (10) comprend un interrupteur configuré pour alimenter sélectivement en courant électrique au moins un autre composant de la scie plongeante (10).

10. Scie plongeante (10) selon la revendication 9, dans laquelle l'indicateur de coupe (500) est adapté pour indiquer la position du bord de la lame de scie circulaire (200) lorsque l'interrupteur applique sélectivement le courant électrique à l'au moins un autre composant de la scie plongeante (10),
dans laquelle l'indicateur de coupe (500) est de préférence adapté pour indiquer la position du bord de la lame de scie circulaire (200) pendant au moins une durée d'affichage de seuil d'au moins 5 secondes.

11. Scie plongeante (10) selon l'une quelconque des revendications 1 à 10, dans laquelle l'articulation de la plaque de base (316) fixe de manière opérationnelle une partie du bord arrière d'un ensemble plongeant à une partie du bord arrière de la plaque de base (304).

12. Scie plongeante (10) selon l'une quelconque des revendications 1 à 11, dans laquelle le mécanisme de plongée (380) comprend un mécanisme de déclenchement de plongée configuré pour être actionné sélectivement par l'utilisateur afin de permettre à la scie plongeante (10) de passer de l'orientation rétractée à l'orientation plongée,
le mécanisme de plongée (380) comprenant de préférence en outre un verrou d'orientation rétractée adapté pour maintenir sélectivement la scie plongeante (10) dans l'orientation rétractée, le mécanisme de déclenchement de plongée étant en outre de préférence adapté pour être actionné sélectivement afin de libérer le verrou d'orientation rétractée et de permettre à la scie plongeante (10) de passer de l'orientation rétractée à l'orientation plongée.

13. Scie plongeante selon l'une quelconque des revendications 1 à 12, dans laquelle la scie plongeante est une scie à rail.

14. Procédé de fonctionnement d'une scie plongeante (10), le procédé comprenant :
actionner un interrupteur de la scie plongeante (10) ;
initiation de la rotation d'une lame de scie circulaire (200) de la scie plongeante (10) en réponse à l'actionnement ;
initiation de la projection d'une ligne de lumière (516) sur une pièce à usiner (98) en réponse à l'actionnement, pour indiquer visuellement sur la pièce à usiner (98) une position d'un bord de la lame de scie circulaire (200) ; et
plonger la lame de scie circulaire (200) dans la pièce à usiner (98) pendant la rotation de la lame de scie circulaire (200) et également pendant la projection de la ligne de lumière (516),
**caractérisé en ce que** la projection de la ligne de lumière (516) comprend la projection de lumière au-delà de la lame de scie circulaire (200) de sorte qu'une première partie de la lumière est incidente sur la lame de scie circulaire (200) et une seconde partie (530) de la lumière est incidente sur la pièce à usiner (98), la seconde partie de la lumière définissant la ligne de lumière (516).

15. Procédé selon la revendication 14, dans lequel l'initiation de la projection comprend l'initiation de la projection d'une ligne de lumière de bord avant (517) sur la pièce à usiner (98),
et/ou dans lequel l'initiation de la projection en réponse à la plongée comprend en outre l'initiation de la projection d'une ligne de lumière (518) du bord arrière sur la pièce à usiner (98),
et/ou dans lequel le procédé comprend en outre le maintien de la projection de la ligne de lumière sur la pièce à usiner (98) pendant au moins une durée d'affichage de seuil d'au moins 5 secondes,
et/ou dans lequel la plongée comprend la rotation d'un ensemble plongeant de la scie plongeante (10), comprenant la lame de scie circulaire (200), par rapport à une plaque de base (304) de la scie plongeante (10) et autour d'une articulation de la plaque de base (316) de la scie plongeante (10),
dans lequel la rotation comprend de préférence la rotation d'un bord avant de l'ensemble plongeant.
